# EUROPEAN PATENT APPLICATION

(11) **EP 3 933 062 A1**
(43) Date of publication of application: **05.01.2022**
(21) Application number: 21181772.1
(22) Date of filing: 25.06.2021
(51) Int. Cl.: C22C 21/02, B21D 22/16, B21D 53/30, B22D 21/04, B60B 1/02

(54) **ALUMINUM ALLOY FOR VEHICLE WHEELS, VEHICLE WHEEL, AND METHOD OF PRODUCING VEHICLE WHEEL**

(30) Priority: 29.06.2020 JP 2020112093
(71) Applicant: Yamaha Hatsudoki Kabushiki Kaisha, Iwata-shi, Shizuoka 438-8501 (JP)
(72) Inventor: SUENAGA, Kentaro, Shizuoka, 438-8501 (JP); KURIMOTO, Yukihiro, Shizuoka, 438-8501 (JP); SUZUKI, Yasunobu, Shizuoka, 438-8501 (JP); MATSUBARA, Keisuke, Shizuoka, 438-8501 (JP); KASHIMA, Hitoshi, Shizuoka, 438-8501 (JP); FUKUJI, Hidehiro, Shizuoka, 438-8501 (JP); NAGAYAMA, Jun, Shizuoka, 438-8501 (JP); OSHIMA, Kahori, Shizuoka, 438-8501 (JP)
(74) Representative: Grünecker Patent- und Rechtsanwälte PartG mbB

(57) **Abstract**

An aluminum alloy for vehicle wheels according to an embodiment of the present invention contains: Si in an amount of not less than 5.0 mass% and not more than 7.5 mass% and Mg in an amount of not less than 0.40 mass% and not more than 0.90 mass%; and Al and inevitable impurities as a balance.

## Description

The present invention relates to an aluminum alloy for vehicle wheels. The present invention also relates to a vehicle wheel and a method of producing a vehicle wheel.

In recent years, along with steels, aluminum alloys are widely used as the material of wheels for automotive vehicles (hereinafter also referred to as "vehicle wheels").

JP 2017-226005 A discloses a method of producing a wheel for cars that is made of an aluminum alloy. The production method disclosed in JP 2017-226005 A includes: a gravity casting step of casting an intermediate work that includes a precursory disc and a precursory rim by gravity casting; and a plastic processing step of performing a plastic processing (which also involves thinning) for the precursory rim of the intermediate work to form a rim. Specifically, as the plastic processing at the plastic processing step, a flow forming process is performed.

After the gravity casting step, by performing a flow forming process for the precursory rim to form a rim, it becomes possible to reduce the weight of the rim, thereby allowing the weight of the entire wheel to be reduced. It is also possible to improve the material strength (mechanical properties) of the rim, in which solidification tends to be slow and defects are likely to remain.

In the case of employing a production method that involves a gravity casting step and a plastic processing step, as in the production method disclosed in JP 2017-226005 A, the aluminum alloy needs to have a composition that is suitable for both gravity casting and flow forming.

The present invention has been made in view of the above problem, and an objective thereof is to provide an aluminum alloy for vehicle wheels having a composition that is suitable for both gravity casting and flow forming. According to the present invention said object is solved by an aluminum alloy for vehicle wheels having the features of independent claim 1. Preferred embodiments are laid down in the dependent claims.

According to certain embodiments of the present teaching, aluminum alloys for vehicle wheels, vehicle wheels, and methods of producing a vehicle wheel as recited in the following Items are provided.
[Item 1] An aluminum alloy for vehicle wheels, comprising:
   Si in an amount of not less than 5.0 mass% and not more than 7.5 mass% and Mg in an amount of not less than 0.40 mass% and not more than 0.90 mass%; and
   Al and an inevitable impurity as a balance.
   The aluminum alloy for vehicle wheels according to Item 1 contains Si in an amount of not less than 5.0 mass% and not more than 7.5 mass% and Mg in an amount of not less than 0.40 mass% and not more than 0.90 mass%. Because the percentage content of Si is 5.0 mass% or more, castability (e.g., melt fluidity) can be adequately improved. However, if the percentage content of Si is too high, toughness may lower. When the percentage content of Si is 7.5 mass% or less, a decrease in toughness can be suppressed. Moreover, because the percentage content of Mg is 0.40 mass% or more, tensile strength and proof stress can be improved. However, if the percentage content of Mg is too high, elongation may lower. When the percentage content of Mg is 0.90 mass% or less, a decrease in elongation due to Mg can be kept at an insignificant level.
   Thus, the aluminum alloy according to Item 1 provides good castability, as well as good tensile strength and proof stress. Good castability makes it easier to realize a complicated shape or a thin-walled shape even in the case of employing a gravity casting technique. Good tensile strength and proof stress make it possible to provide a sufficient strength even in the case of a complicated shape or a thin-walled shape.
   As has already been described, as the amount of Mg added to the aluminum alloy is increased, tensile strength and proof stress may improve, but elongation (toughness) tends to lower. When a flow forming process is performed for the product (intermediate product) after casting (e.g., gravity casting), the metallographic structure changes through plastic deformation (or more specifically, the metallographic structure becomes stretched out to create a metal flow) at the site(s) which have been subjected to the flow forming process; as a result, elongation improves, thus to compensate for a decrease in elongation that is ascribable to the increased amount of Mg added. Therefore, the aluminum alloy for vehicle wheels according to Item 1 can be suitably used for vehicle wheels that are produced through a combination of a gravity casting technique and a flow forming process.
[Item 2] The aluminum alloy for vehicle wheels of Item 1, in which Cu has a percentage content of 0.20 mass% or less.
   If the percentage content of Cu is too high, elongation may lower. Therefore, the percentage content of Cu is preferably 0.20 mass% or less.
[Item 3] The aluminum alloy for vehicle wheels of Item 1 or 2, in which Fe has a percentage content of 0.20 mass% or less.
   If the percentage content of Fe is too high, toughness may lower. When the percentage content of Fe is 0.20 mass% or less, a decrease in toughness ascribable to Fe can be suppressed.
[Item 4] The aluminum alloy for vehicle wheels of any of Items 1 to 3, in which Ti has a percentage content of 0.20 mass% or less.
   If the percentage content of Ti is too high, toughness may lower. When the percentage content of Ti is 0.20 mass% or less, a decrease in toughness ascribable to Ti can be suppressed.
[Item 5] The aluminum alloy for vehicle wheels of any of Items 1 to 4, further comprising: Na in an amount of not less than 0.002 mass% and not more than 0.01 mass%; or Sr in an amount of not less than 0.005 mass% and not more than 0.03 mass%.
   When the aluminum alloy further contains Na in an amount of not less than 0.002 mass% and not more than 0.01 mass%, or Sr in an amount of not less than 0.005 mass% and not more than 0.03 mass%, modification (microstructuring of the eutectic Si phase) can be suitably achieved.
[Item 6] A vehicle wheel comprising: a hub having an aperture into which a wheel shaft is to be inserted; an annular rim; and a plurality of spokes connecting the hub and the rim,
   wherein the vehicle wheel is made of the aluminum alloy for vehicle wheels of any of Items 1 to 5.
   An aluminum alloy for vehicle wheels according to an embodiment of the present teaching can be suitably used for forming a vehicle wheel (e.g., a wheel of a motorcycle).
[Item 7] A method of producing a vehicle wheel comprising: a hub having an aperture into which a wheel shaft is to be inserted; an annular rim; and a plurality of spokes connecting the hub and the rim, the method comprising:
   step (A) of providing the aluminum alloy for vehicle wheels of any of Items 1 to 5;
   step (B) of forming an intermediate product from the aluminum alloy by using a gravity casting technique, the intermediate product including a precursory hub, a precursory rim, and a plurality of precursory spokes connecting the precursory hub and the precursory rim; and
   step (C) of performing a flow forming process for the precursory rim of the intermediate product.
   The method of producing a vehicle wheel according to Item 7 includes: step (A) an aluminum alloy for vehicle wheels having any of the aforementioned compositions (i.e., the aluminum alloy for vehicle wheels according to any of Items 1 to 5); step (B) of forming an intermediate product by using a gravity casting technique from the aluminum alloy provided; and step (C) of performing a flow forming process for the precursory rim of the intermediate product.
   With the production method according to Item 7, the aluminum alloy provided at step (A) contains Si in an amount of not less than 5.0 mass% and not more than 7.5 mass% and Mg in an amount of not less than 0.40 mass% and not more than 0.90 mass%. Thus, the aluminum alloy provided has good castability, as well as good tensile strength and proof stress. The aluminum alloy having good castability makes it easier to realize a complicated shape or a thin-walled shape even in the case of employing a gravity casting technique at step (B) of forming the intermediate product. Good tensile strength and proof stress make it possible to provide a sufficient strength even in the case of a complicated shape or a thin-walled shape. As the amount of Mg added to the aluminum alloy is increased, tensile strength and proof stress may improve, but elongation (toughness) tends to lower; however, because a flow forming process is performed for the precursory rim of the intermediate product at step (C), elongation of the rim of the product improves, thus to compensate for a decrease in elongation that is ascribable to the increased amount of Mg added. Therefore, with the production method according to an embodiment of the present teaching, the rim can be enhanced in terms of not only tensile strength and proof stress, but also elongation (toughness).
[Item 8] The method of producing a vehicle wheel of Item 7, further comprising:
   step (D) of performing a solution treatment after step (C);
   step (E) of performing a quenching process after step (D); and
   step (F) of performing an artificial aging process after step (E).

The method of producing a vehicle wheel may further include step (D) of performing a solution treatment after step (C), step (E) of performing a quenching process after step (D), and step (F) of performing an artificial aging process after step (E). This series of processes allows mechanical properties to be adjusted (e.g., so that tensile strength, proof stress, and hardness are increased).

According to an embodiment of the present teaching, there is provided an aluminum alloy for vehicle wheels having a composition that is suitable for both gravity casting and flow forming.

### BRIEF DESCRIPTION OF THE DRAWINGS

FIG. 1 is a left side view schematically showing a vehicle wheel 100 that is made of an aluminum alloy for vehicle wheels according to an embodiment of the present teaching.
FIG. 2 is a right side view schematically showing the vehicle wheel 100.
FIG. 3 is a plan view showing the vehicle wheel 100 as viewed from a radial direction.
FIG. 4 is a graph showing a relationship between the percentage content of Si and tensile strength and proof stress for Examples 1 to 3 and Comparative Example 3.
FIG. 5 is a graph showing a relationship between the percentage content of Si and elongation for Examples 1 to 3 and Comparative Example 3.
FIG. 6 is a graph showing a relationship between the percentage content of Mg and tensile strength and proof stress for Examples 3 to 7 and Comparative Examples 4 and 5.
FIG. 7 is a graph showing a relationship between the percentage content of Mg and elongation for Examples 3 to 7 and Comparative Examples 4 and 5.
FIG. 8 is a graph showing a relationship between the percentage content of Cu and tensile strength and proof stress for Examples 3, 8 and 9.
FIG. 9 is a graph showing a relationship between the percentage content of Cu and elongation for Examples 3, 8 and 9.
FIG. 10 is a graph showing a relationship between the percentage content of Fe and tensile strength and proof stress for Examples 3, 10 and 11.
FIG. 11 is a graph showing a relationship between the percentage content of Fe and elongation for Examples 3, 10 and 11.
FIG. 12 is a graph showing a relationship between the percentage content of Ti and tensile strength and proof stress for Examples 3, 12 and 13.
FIG. 13 is a graph showing a relationship between the percentage content of Ti and elongation for Examples 3, 12 and 13.
FIG. 14 is a graph showing a relationship between the percentage content of Na and tensile strength and proof stress for Examples 14 to 17.
FIG. 15 is a graph showing a relationship between the percentage content of Na and elongation for Examples 14 to 17.
FIG. 16 is a graph showing a relationship between the percentage content of Sr and tensile strength and proof stress for Examples 3, 14, and 18 to 20.
FIG. 17 is a graph showing a relationship between the percentage content of Sr and elongation for Examples 3, 14, and 18 to 20.
FIG. 18 is a flowchart showing an example of a method of producing the vehicle wheel 100.
FIG. 19 is a left side view schematically showing a workpiece (intermediate product) 100'.
FIG. 20 is a right side view schematically showing the workpiece 100'.
FIG. 21 is a plan view showing the workpiece 100' as viewed from a radial direction.
FIG. 22 is a left side view schematically showing the workpiece 100' after a flow forming process.
FIG. 23 is a right side view schematically showing the workpiece 100' after a flow forming process.
FIG. 24 is a plan view showing the workpiece 100' after a flow forming process as viewed from a radial direction.
FIG. 25 is a left side view schematically showing the workpiece 100'.
FIG. 26 is a right side view schematically showing the workpiece 100'.
FIG. 27 is a cross-sectional view taken along line 27A-27A' in FIG. 25.
FIG. 28 is a cross-sectional view taken along line 28A-28A' in FIG. 25.
FIG. 29 is a diagram schematically showing a flow forming apparatus 10.
FIG. 30 is a side view schematically showing a lower mandrel 21 and an upper mandrel 22.
FIG. 31 is a cross-sectional view schematically showing a state where the workpiece 100' is clamped by the lower mandrel 21 and the upper mandrel 22.
FIG. 32 is a left side view schematically showing the workpiece 100' after a flow forming process.
FIG. 33 is a right side view schematically showing the workpiece 100' after a flow forming process.
FIG. 34 is a left side view schematically showing the workpiece 100'.
FIG. 35 is a right side view schematically showing the workpiece 100'.
FIG. 36 is a left side view schematically showing the workpiece 100'.
FIG. 37 is a right side view schematically showing the workpiece 100'.
FIG. 38 is a cross-sectional view taken along line 38A-38A' in FIG. 36.
FIG. 39 is a cross-sectional view taken along line 39A-39A' in FIG. 36.

### DETAILED DESCRIPTION

Hereinafter, embodiments of the present teaching will be described with reference to the drawings.

### [vehicle wheel]

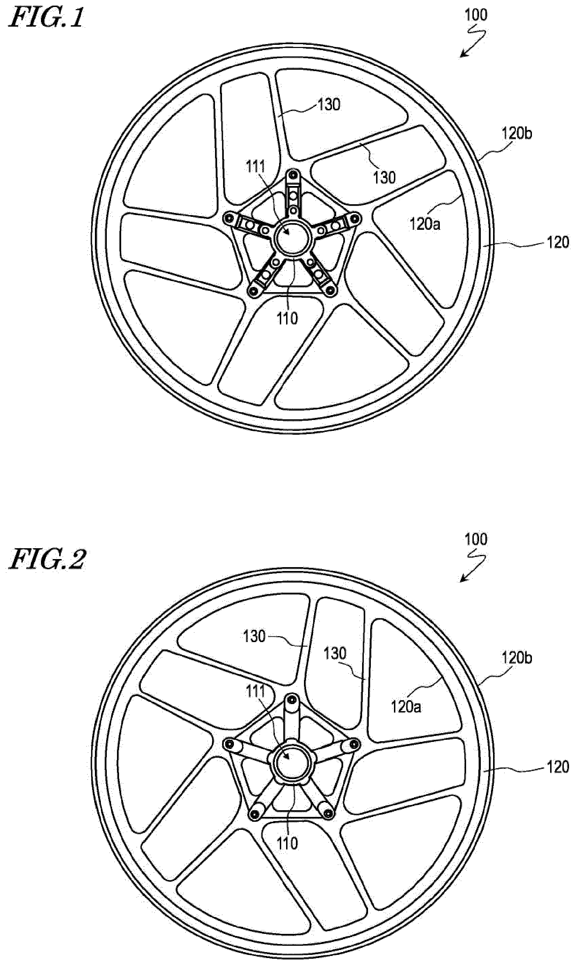

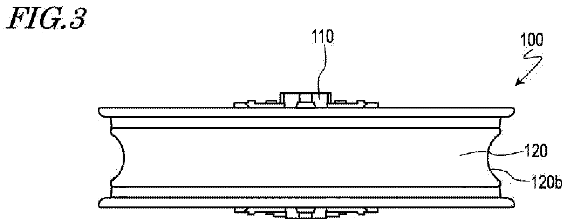

With reference to FIGS. 1 to 3, an example of a wheel for straddled vehicles (hereinafter simply referred to as a "wheel") that is made of an aluminum alloy for vehicle wheels (hereinafter simply referred to as an "aluminum alloy") according to an embodiment of the present teaching will be described. FIGS. 1 and 2 are a left side view and a right side view, respectively, schematically showing the wheel 100. FIG. 3 is a plan view showing the wheel 100 from a radial direction.

As shown in FIGS. 1, 2 and 3, the wheel 100 includes a hub 110, a rim 120, and a plurality of spokes 130. The hub 110, the rim 120, and the plurality of spokes 130 are monolithically formed.

The hub 110 is located in the center of the wheel 100, and has an aperture (wheel-shaft insertion hole) 111, into which a wheel shaft is to be inserted. A direction that is parallel to a center axis of the wheel-shaft insertion hole 111 may be referred to as the "axial direction" hereinbelow. Note that the specific shape of the hub 110 is not limited to what is illustrated in FIG. 1, etc.

The rim 120 has an annular shape, and extends along the circumferential direction of the wheel 100. The rim 120 has an inner peripheral surface 120a and an outer peripheral surface 120b. A tire is to be mounted on the outer peripheral surface 120b of the rim 120.

The plurality of spokes 130 connect the hub 110 and the rim 120. More specifically, the plurality of spokes 130 connect an outer periphery of the hub 110 and the inner peripheral surface 120a of the rim 120. Although the example shown illustrates the wheel 100 as having ten spokes 130, the number of spokes 130 is not limited to ten. Although the example shown illustrates that two adjacent spokes 130 are united at the hub 110 side, the configuration of the spokes 130 is not limited thereto.

The wheel 100 is made of an aluminum alloy. The specific composition of the aluminum alloy will be described in detail below. The wheel 100 may suitably be produced by a production method that includes a step of forming an intermediate product from an aluminum alloy by using a gravity casting technique, and a step of performing a flow forming process for a portion of the intermediate product. The method of producing the wheel 100 will also be described in detail below.

### [aluminum alloy]

An aluminum alloy according to an embodiment of the present teaching will be described.

An aluminum alloy according to an embodiment of the present teaching contains silicon (Si) in an amount of not less than 5.0 mass% and not more than 7.5 mass%, magnesium (Mg) in an amount of not less than 0.40 mass% and not more than 0.90 mass%, and aluminum (Al) and inevitable impurities as a balance.

When the percentage content of Si is 5.0 mass% or more, castability (e.g., melt fluidity) can be adequately improved. The influence of the percentage content of Si on the melt fluidity is disclosed in Kitaoka and 2 others, "Al-Si type alloys", Light Metals, 1988, pp.426-446 (hereinafter "Non-Patent Document 1"), for example. Non-Patent Document 1 states that, for example, given a constant pour point, lowest fluidity results when the percentage content of Si is 2 to 3 mass%. On the other hand, if the percentage content of Si is too high, toughness may lower. When the percentage content of Si is 7.5 mass% or less, a decrease in toughness can be suppressed.

Moreover, since Mg yields a deposition (Mg2Si) with Si, when the percentage content of Mg is 0.40 mass% or more, tensile strength and proof stress can be improved. However, if the percentage content of Mg is too high, elongation may lower. When the percentage content of Mg is 0.90 mass% or less, a decrease in elongation due to Mg can be kept at an insignificant level.

Thus, an aluminum alloy according to an embodiment of the present teaching has good castability, as well as good tensile strength and proof stress. Good castability makes it easier to realize a complicated shape (e.g., the shape of a vehicle wheel) or a thin-walled shape, even by using a gravity casting technique. Good tensile strength and proof stress make it possible to provide a sufficient strength even in the case of a complicated shape or a thin-walled shape.

As has already been described, as the amount of Mg added to the aluminum alloy is increased, tensile strength and proof stress may improve, but elongation (toughness) tends to lower. When a flow forming process is performed for the product (intermediate product) after casting (e.g., gravity casting), the metallographic structure changes through plastic deformation (or more specifically, the metallographic structure becomes stretched out to create a metal flow) at the site(s) which have been subjected to the flow forming process; as a result, elongation improves, thus to compensate for a decrease in elongation that is ascribable to the increased amount of Mg added. Therefore, an aluminum alloy according to an embodiment of the present teaching can be suitably used for vehicle wheels that are produced through a combination of a gravity casting technique and a flow forming process.

If the percentage content of Cu is too high, elongation may lower. Therefore, the percentage content of Cu is preferably 0.20 mass% or less.

The percentage content of Fe is preferably 0.20 mass% or less. If the percentage content of Fe is too high, toughness may lower. When the percentage content of Fe is 0.20 mass% or less, a decrease in toughness that is ascribable to Fe can be suppressed. From the standpoint of suppressing a decrease in toughness, it is more preferable that the percentage content of Fe is 0.15 mass% or less.

The percentage content of Ti is preferably 0.20 mass% or less. If the percentage content of Ti is too high, a decrease in toughness may be caused. When the percentage content of Ti is 0.20 mass% or less, a decrease in toughness that is ascribable to Ti can be suppressed.

When the aluminum alloy further contains Na in an amount of not less than 0.002 mass% and not more than 0.01 mass%, or Sr in an amount of not less than 0.005 mass% and not more than 0.03 mass%, modification (microstructuring of the eutectic Si phase) can be suitably achieved.

An aluminum alloy according to an embodiment of the present teaching can be suitably used for forming a vehicle wheel (e.g., a wheel of a motorcycle).

Now, results of studying influences of changes in the percentage content of Si, Mg, etc., in the aluminum alloy on tensile strength, proof stress, and elongation (toughness) will be described.

### <Si percentage content>

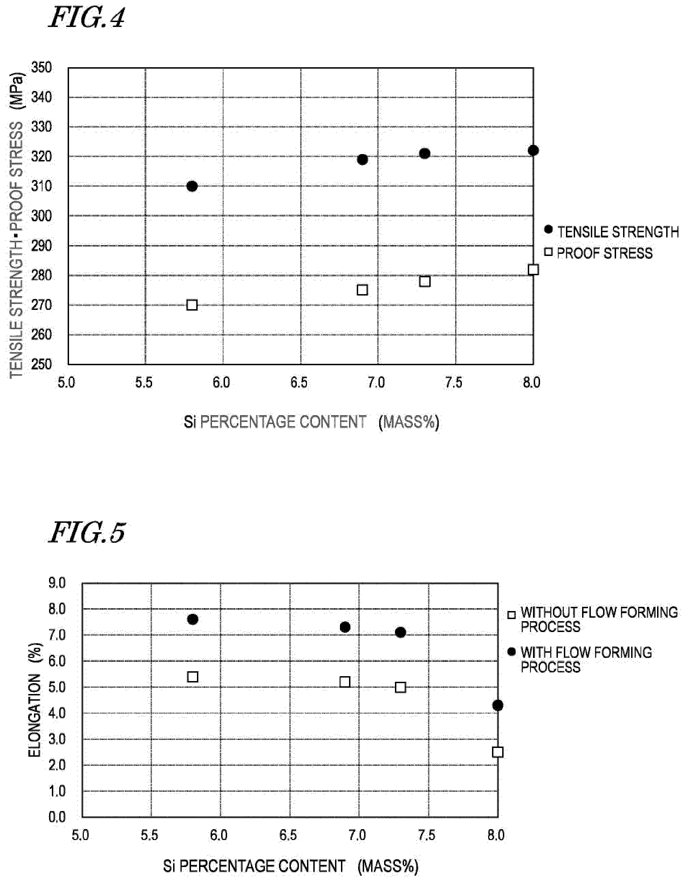

Table 1 shows the compositions and measurement results of tensile strength, proof stress, and elongation for aluminum alloys of Examples 1 to 3 and Comparative Examples 1 to 3. As for elongation, the case where a flow forming process was not performed for the sample (indicated as "w/o FF") and the case where a flow forming process was performed for the sample (indicated as "w/ FF") are also shown. Also, for Examples 1 to 3 and Comparative Example 3, their relationship between the percentage content of Si and tensile strength and proof stress is shown in FIG. 4, and their relationship between the percentage content of Si and elongation is shown in FIG. 5. In the following, a preferable tensile strength of 300 MPa or more and a preferable proof stress of 250 MPa or more are assumed, and a preferable elongation (in the case of not performing a flow forming process) of 3% or more and a preferable elongation (in the case of performing a flow forming process) of 5% or more are assumed.

**[Table 1]**

| influences of Si percentage content | | | | | | | | | | | | |
|---|---|---|---|---|---|---|---|---|---|---|---|---|
| | composition (mass%) | | | | | | | | measurement results | | | |
| | | | | | | | | | tensile strength (MPa) | proof stress (MPa) | elongation (%) | |
| | Cu | Si | Mg | Fe | Ti | Na | Sr | Al | | | w/oFF | w/FF |
| Comparative Example 1 | 0.00 | **4.5** | 0.70 | 0.12 | 0.11 | 0.000 | 0.013 | balance | 298 | 265 | 5.8 | 8.0 |
| Comparative Example 2 | 0.00 | **4.8** | 0.68 | 0.11 | 0.12 | 0.000 | 0.014 | balance | 305 | 266 | 5.5 | 7.8 |
| Example 1 | 0.00 | **5.8** | 0.71 | 0.09 | 0.12 | 0.000 | 0.009 | balance | 310 | 270 | 5.4 | 7.6 |
| Example 2 | 0.00 | **6.9** | 0.70 | 0.11 | 0.10 | 0.000 | 0.010 | balance | 319 | 275 | 5.2 | 7.3 |
| Example 3 | 0.00 | **7.3** | 0.68 | 0.12 | 0.12 | 0.000 | 0.010 | balance | 321 | 278 | 5.0 | 7.1 |
| Comparative Example 3 | 0.00 | **8.0** | 0.72 | 0.12 | 0.10 | 0.000 | 0.013 | balance | 322 | 282 | 2.5 | 4.3 |

As can be seen from Table 1 and FIG. 4 and FIG. 5, in Examples 1 to 3, preferable levels are attained in all of tensile strength, proof stress, and elongation. On the other hand, in Comparative Example 3, where the percentage content of Si is 8.0 mass% (i.e., above 7.5 mass%), elongation is insufficient and toughness is poor, as can be seen from Table 1 and FIG. 5.

### <Mg percentage content>

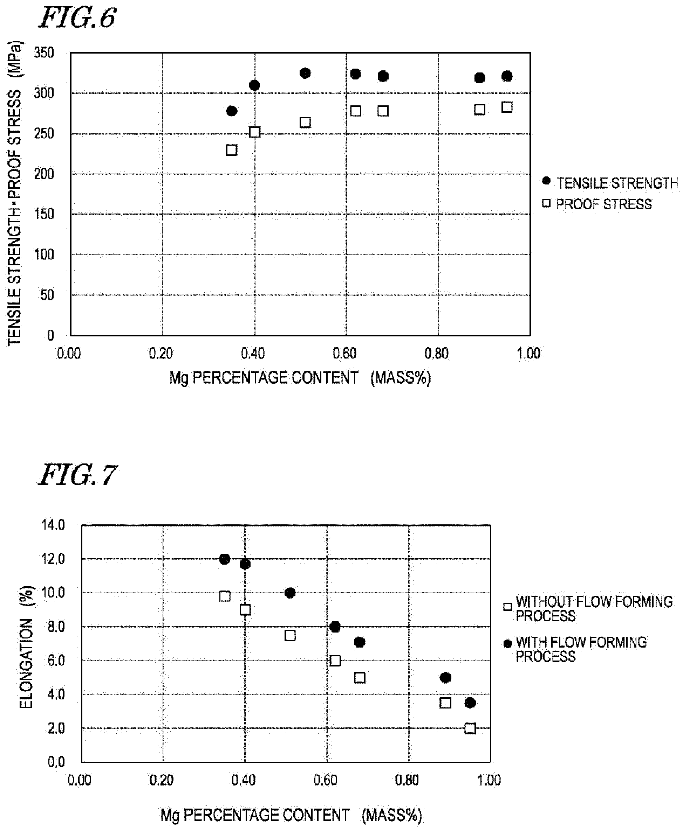

Table 2 shows the compositions and measurement results of tensile strength, proof stress, and elongation for aluminum alloys of Examples 3 to 7 and Comparative Examples 4 and 5. Also, for Examples 3 to 7 and Comparative Examples 4 and 5, their relationship between the percentage content of Mg and tensile strength and proof stress is shown in FIG. 6, and their relationship between the percentage content of Mg and elongation is shown in FIG. 7.

**[Table 2]**

| influences of Mg percentage content | | | | | | | | | | | | |
|---|---|---|---|---|---|---|---|---|---|---|---|---|
| | composition (mass%) | | | | | | | | measurement results | | | |
| | | | | | | | | | tensile strength (MPa) | proof stress (MPa) | elongation (%) | |
| | Cu | Si | Mg | Fe | Ti | Na | Sr | Al | | | w/oFF | w/FF |
| Comparative Example 4 | 0.00 | 7.2 | **0.35** | 0.10 | 0.11 | 0.000 | 0.010 | balance | 278 | 230 | 9.8 | 12.0 |
| Example 4 | 0.00 | 7.2 | **0.40** | 0.09 | 0.12 | 0.000 | 0.013 | balance | 310 | 252 | 9.0 | 11.7 |
| Example 5 | 0.00 | 6.9 | **0.51** | 0.09 | 0.11 | 0.000 | 0.015 | balance | 325 | 264 | 7.5 | 10.0 |
| Example 6 | 0.00 | 7.1 | **0.62** | 0.11 | 0.11 | 0.000 | 0.013 | balance | 324 | 278 | 6.0 | 8.0 |
| Example 3 | 0.00 | 7.3 | **0.68** | 0.12 | 0.12 | 0.000 | 0.010 | balance | 321 | 278 | 5.0 | 7.1 |
| Example 7 | 0.00 | 6.9 | **0.89** | 0.12 | 0.11 | 0.000 | 0.015 | balance | 319 | 280 | 3.5 | 5.0 |
| Comparative Example 5 | 0.00 | 7.0 | **0.95** | 0.11 | 0.10 | 0.000 | 0.015 | balance | 321 | 283 | 2.0 | 3.5 |

As can be seen from Table 2 and FIG. 6 and FIG. 7, in Examples 3 to 7, preferable levels are attained in all of tensile strength, proof stress, and elongation. On the other hand, in Comparative Example 4, where the percentage content of Mg is 0.35 mass% (i.e., below 0.40 mass%), tensile strength and proof stress are insufficient, as can be seen from Table 2 and FIG. 6. Moreover, in Comparative Example 5, where the percentage content of Mg is 0.95 mass% (i.e., above 0.90 mass%), elongation is insufficient, as can be seen from Table 2 and FIG. 7.

### <Cu percentage content>

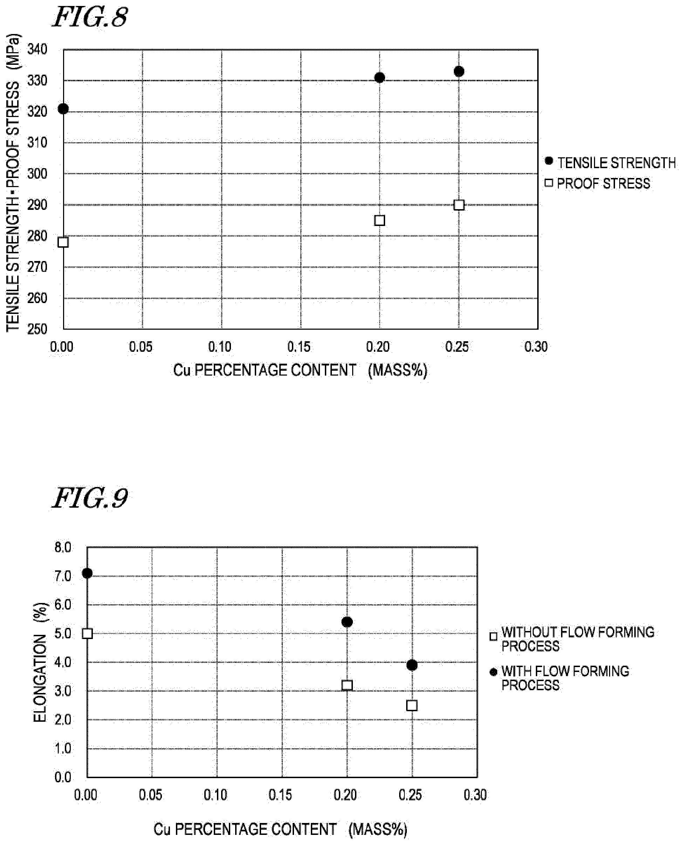

Table 3 shows the compositions and measurement results of tensile strength, proof stress, and elongation for aluminum alloys of Examples 3, 8 and 9. Also, for Examples 3, 8 and 9, their relationship between the percentage content of Cu and tensile strength and proof stress is shown in FIG. 8, and their relationship between the percentage content of Cu and elongation is shown in FIG. 9.

**[Table 3]**

| influences of Cu percentage content | | | | | | | | | | | | |
|---|---|---|---|---|---|---|---|---|---|---|---|---|
| | composition (mass%) | | | | | | | | measurement results | | | |
| | | | | | | | | | tensile strength (MPa) | proof stress (MPa) | elongation (%) | |
| | Cu | Si | Mg | Fe | Ti | Na | Sr | Al | | | w/oFF | w/FF |
| Example 3 | **0.00** | 7.3 | 0.68 | 0.12 | 0.12 | 0.000 | 0.010 | balance | 321 | 278 | 5.0 | 7.1 |
| Example 8 | **0.20** | 7.0 | 0.70 | 0.11 | 0.10 | 0.000 | 0.012 | balance | 331 | 285 | 3.2 | 5.4 |
| Example 9 | **0.25** | 7.0 | 0.71 | 0.11 | 0.11 | 0.000 | 0.015 | balance | 333 | 290 | 2.5 | 3.9 |

As can be seen from Table 3 and FIG. 8 and FIG. 9, in Examples 3 and 8, preferable levels are attained in all of tensile strength, proof stress, and elongation. On the other hand, in Example 9, where the percentage content of Cu is 0.25 mass% (i.e., above 0.20 mass%), elongation is smaller than in Examples 3 and 8, as can be seen from Table 3 and FIG. 9.

### <Fe percentage content>

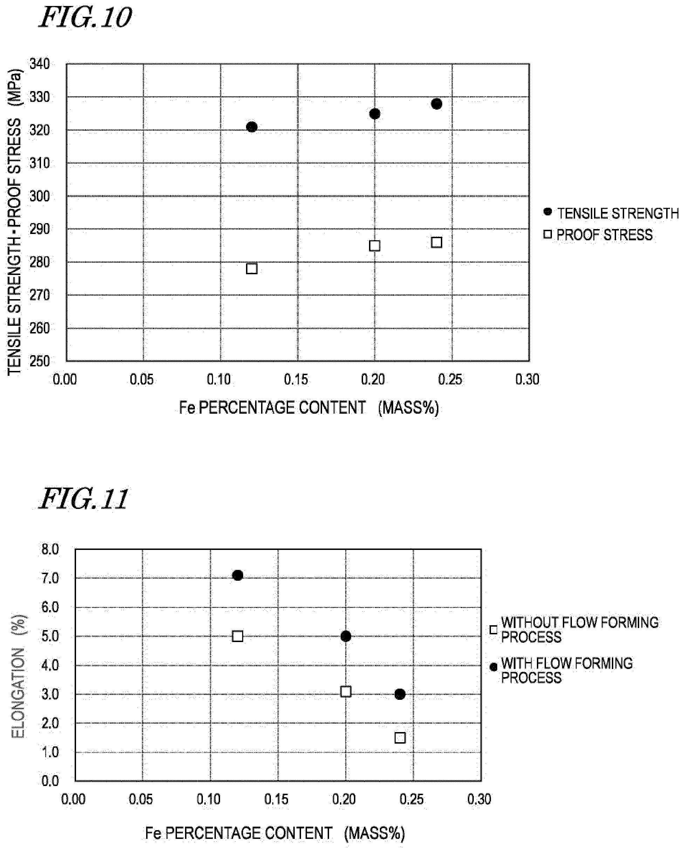

Table 4 shows the compositions and measurement results of tensile strength, proof stress, and elongation for aluminum alloys of Examples 3, 10 and 11. Also, for Examples 3, 10 and 11, their relationship between the percentage content of Fe and tensile strength and proof stress is shown in FIG. 10, and their relationship between the percentage content of Fe and elongation is shown in FIG. 11.

**[Table 4]**

| influences of Fe percentage content | | | | | | | | | | | | |
|---|---|---|---|---|---|---|---|---|---|---|---|---|
| | composition (mass%) | | | | | | | | measurement results | | | |
| | | | | | | | | | tensile strength (MPa) | proof stress (MPa) | elongation (%) | |
| | Cu | Si | Mg | Fe | Ti | Na | Sr | Al | | | w/oFF | w/FF |
| Example 3 | 0.00 | 7.3 | 0.68 | **0.12** | 0.12 | 0.000 | 0.010 | balance | 321 | 278 | 5.0 | 7.1 |
| Example 10 | 0.00 | 7.3 | 0.70 | **0.20** | 0.11 | 0.000 | 0.014 | balance | 325 | 285 | 3.1 | 5.0 |
| Example 11 | 0.00 | 7.2 | 0.70 | **0.24** | 0.11 | 0.000 | 0.012 | balance | 328 | 286 | 1.5 | 3.0 |

As can be seen from Table 4 and FIG. 10 and FIG. 11, in Examples 3 and 10, preferable levels are attained in all of tensile strength, proof stress, and elongation. On the other hand, in Example 11, where the percentage content of Fe is 0.24 mass% (i.e., above 0.20 mass%), elongation is smaller (i.e., toughness is lower) than in Examples 3 and 10, as can be seen from Table 4 and FIG. 11.

### <Ti percentage content>

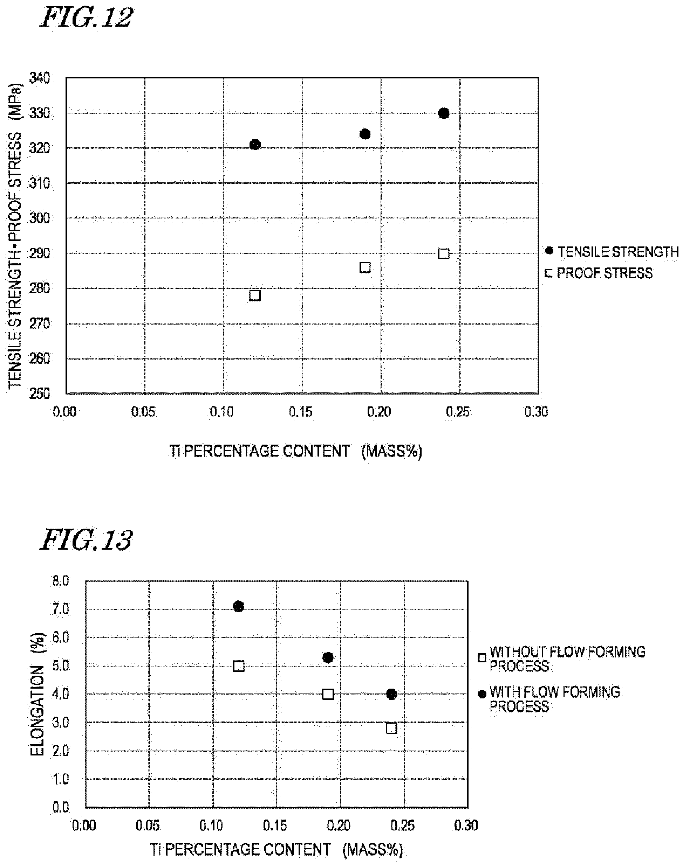

Table 5 shows the compositions and measurement results of tensile strength, proof stress, and elongation for aluminum alloys of Examples 3, 12 and 13. Also, for Examples 3, 12 and 13, their relationship between the percentage content of Ti and tensile strength and proof stress is shown in FIG. 12, and their relationship between the percentage content of Ti and elongation is shown in FIG. 13.

**[Table 5]**

| influences of Ti percentage content | | | | | | | | | | | | |
|---|---|---|---|---|---|---|---|---|---|---|---|---|
| | composition (mass%) | | | | | | | | measurement results | | | |
| | | | | | | | | | tensile strength (MPa) | proof stress (MPa) | elongation (%) | |
| | Cu | Si | Mg | Fe | Ti | Na | Sr | Al | | | w/oFF | w/FF |
| Example 3 | 0.00 | 7.3 | 0.68 | 0.12 | **0.12** | 0.000 | 0.010 | balance | 321 | 278 | 5.0 | 7.1 |
| Example 12 | 0.00 | 7.4 | 0.72 | 0.11 | **0.19** | 0.000 | 0.009 | balance | 324 | 286 | 4.0 | 5.3 |
| Example 13 | 0.00 | 7.5 | 0.71 | 0.12 | **0.24** | 0.000 | 0.011 | balance | 330 | 290 | 2.8 | 4.0 |

As can be seen from Table 5 and FIG. 12 and FIG. 13, in Examples 3 and 12, preferable levels are attained in all of tensile strength, proof stress, and elongation. On the other hand, in Example 13, where the percentage content of Ti is 0.24 mass% (i.e., above 0.20 mass%), elongation is smaller (i.e., toughness is lower) than in Examples 3 and 10, as can be seen from Table 5 and FIG. 13.

### <Na and Sr percentage contents>

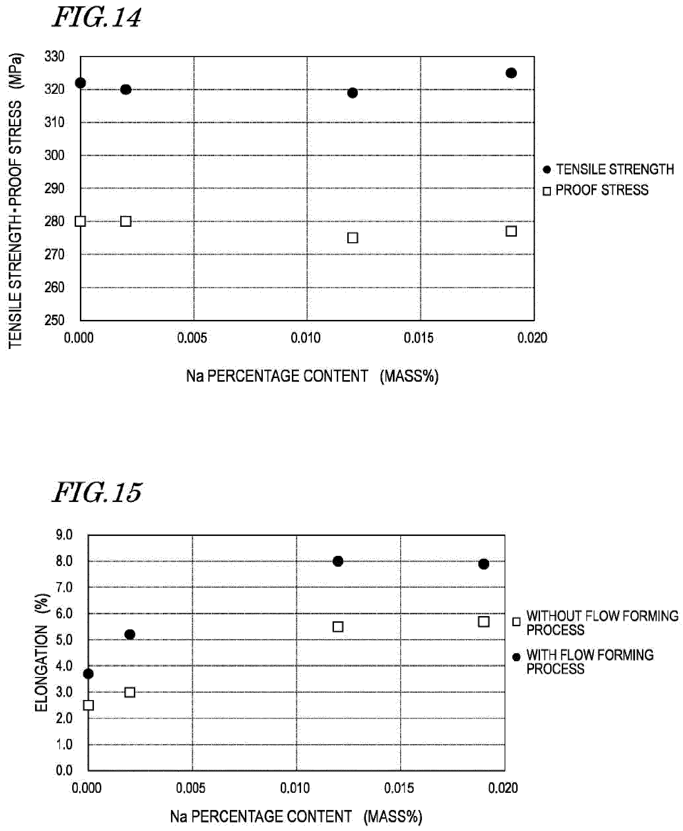

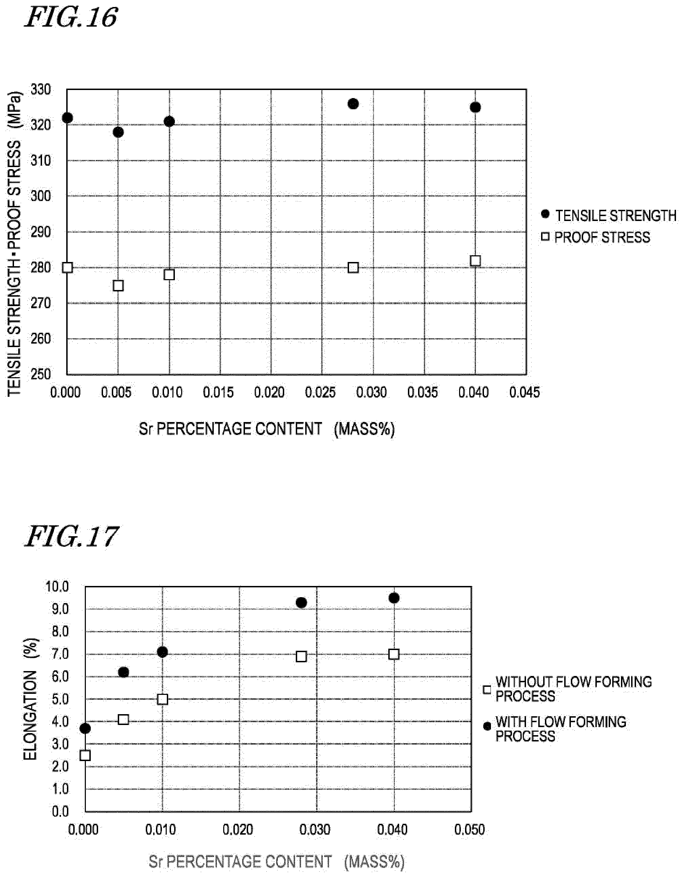

Table 6 shows the compositions and measurement results of tensile strength, proof stress, and elongation for aluminum alloys of Examples 3, and 14 to 20. Also, for Examples 14 to 17, their relationship between the percentage content of Na and tensile strength and proof stress is shown in FIG. 14, and their relationship between the percentage content of Na and elongation is shown in FIG. 15. Also, for Examples 3, 14, and 18 to 20, their relationship between the percentage content of Sr and tensile strength and proof stress is shown in FIG. 16, and their relationship between the percentage content of Sr and elongation is shown in FIG. 17.

**[Table 6]**

| influences of Na and Sr percentage contents | | | | | | | | | | | | |
|---|---|---|---|---|---|---|---|---|---|---|---|---|
| | composition (mass%) | | | | | | | | measurement results | | | |
| | | | | | | | | | tensile strength (MPa) | proof stress (MPa) | elongation (%) | |
| | Cu | Si | Mg | Fe | Ti | Na | Sr | Al | | | w/oFF | w/FF |
| Example 14 | 0.00 | 7.2 | 0.73 | 0.10 | 0.11 | **0.000** | **0.000** | balance | 322 | 280 | 2.5 | 3.7 |
| Example 15 | 0.00 | 7.0 | 0.70 | 0.10 | 0.12 | **0.002** | **0.000** | balance | 320 | 280 | 3.0 | 5.2 |
| Example 16 | 0.00 | 7.3 | 0.69 | 0.12 | 0.12 | **0.012** | **0.000** | balance | 319 | 275 | 5.5 | 8.0 |
| Example 17 | 0.00 | 7.1 | 0.71 | 0.11 | 0.11 | **0.019** | **0.000** | balance | 325 | 277 | 5.7 | 7.9 |
| Example 18 | 0.00 | 7.1 | 0.70 | 0.09 | 0.12 | **0.000** | **0.005** | balance | 318 | 275 | 4.1 | 6.2 |
| Example 3 | 0.00 | 7.3 | 0.68 | 0.12 | 0.12 | **0.000** | **0.010** | balance | 321 | 278 | 5.0 | 7.1 |
| Example 19 | 0.00 | 7.2 | 0.70 | 0.12 | 0.10 | **0.000** | **0.028** | balance | 326 | 280 | 6.9 | 9.3 |
| Example 20 | 0.00 | 6.9 | 0.72 | 0.10 | 0.11 | **0.000** | **0.040** | balance | 325 | 282 | 7.0 | 9.5 |

As can be seen from Table 6 and FIG. 14 to FIG. 17, in Examples 3, and 15 to 20, preferable levels are attained in all of tensile strength, proof stress, and elongation. On the other hand, in Example 14, where neither Na nor Sr is substantially contained, elongation is smaller than in Examples 3, and 15 to 20, as can be seen from Table 6 and FIG. 15 and FIG. 17. This is presumably because modification (microstructuring of the eutectic Si phase) is not suitably achieved.

### [Method of producing a vehicle wheel]

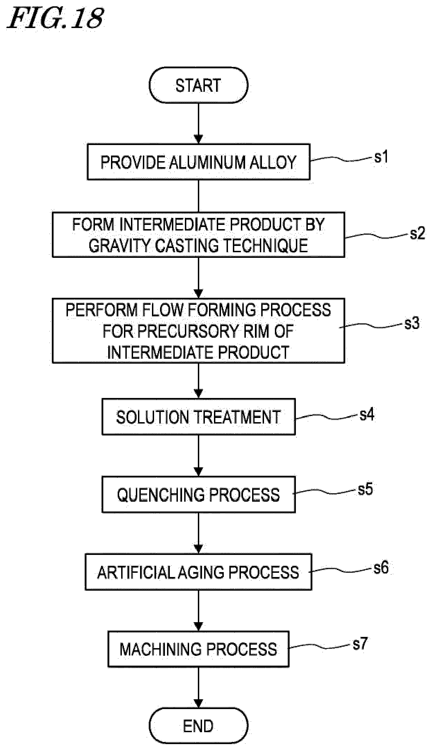

With reference to FIG. 18, a method of producing the wheel 100 will be described. FIG. 18 is a flowchart showing an example of a method of producing the wheel 100.

First, an aluminum alloy is provided (Step s1). The aluminum alloy to be provided has the aforementioned composition; that is, the aluminum alloy contains Si in an amount of not less than 5.0 mass% and not more than 7.5 mass% and Mg in an amount of not less than 0.40 mass% and not more than 0.90 mass%, and Al and inevitable impurities as a balance.

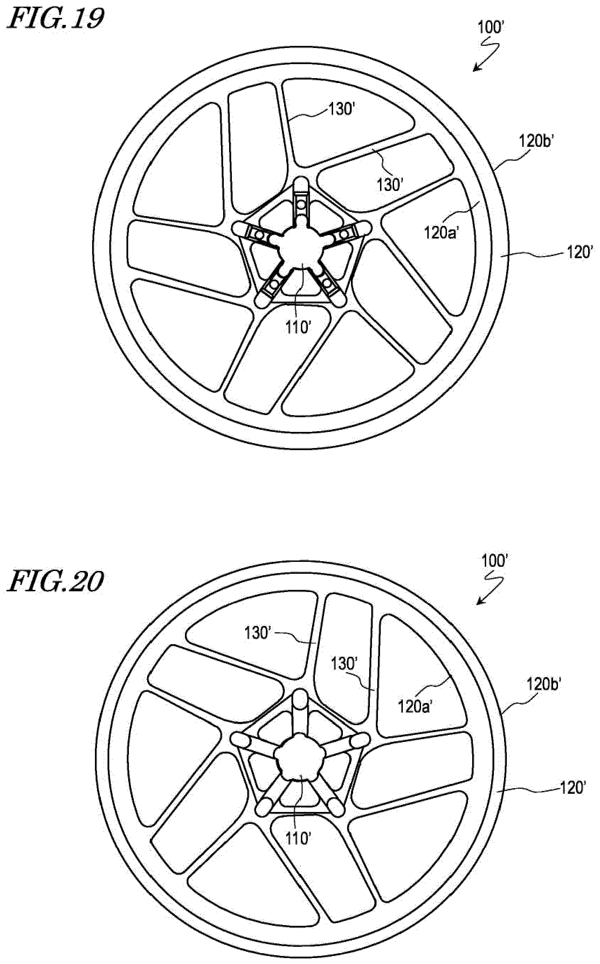

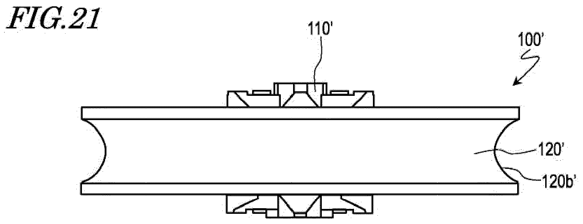

Next, by using a gravity casting technique, an intermediate product (hereinafter referred to as a "workpiece") is formed from the aluminum alloy provided (Step s2). There is no particular limitation as to the gravity casting technique used for forming the workpiece. Specific shapes for the workpiece are shown in FIG. 19, FIG. 20 and FIG. 21. FIG. 19 and FIG. 20 are a left side view and a right side view, respectively, schematically showing the workpiece 100'. FIG. 21 is a plan view showing the workpiece 100' as viewed from a radial direction.

As shown in FIG. 19, FIG. 20 and FIG. 21, the workpiece 100' includes a precursory hub 110', a precursory rim 120', and a plurality of precursory spokes 130' connecting the precursory hub 110' and the precursory rim 120'. The precursory hub 110' is a portion to become the hub 110 of the wheel 100. Similarly, the precursory rim 120' is a portion to become the rim 120, and the precursory spokes 130' are portions to become the spokes 130.

The precursory hub 110' is located at the center of the workpiece 100'. In the example shown, the wheel-shaft insertion hole 111 is not formed in the precursory hub 110' yet. The precursory rim 120' has an annular shape, and extends along the circumferential direction of the workpiece 100'. The precursory rim 120' has an inner peripheral surface 120a' and an outer peripheral surface 120b'. The plurality of precursory spokes 130' connect the precursory hub 110' and the precursory rim 120'. More specifically, the plurality of precursory spokes 130' connect an outer periphery of the precursory hub 110' and the inner peripheral surface 120a' of the precursory rim 120'.

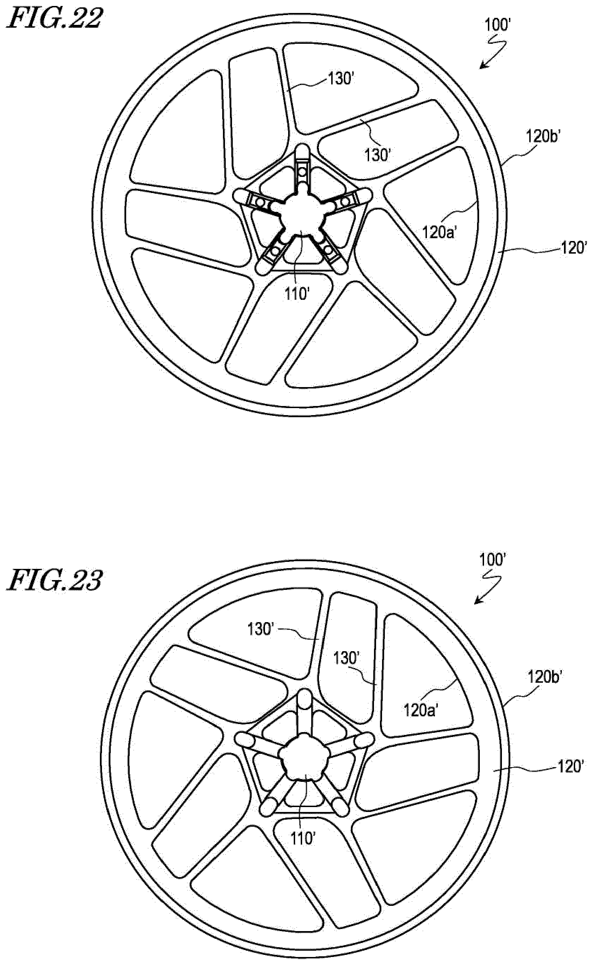

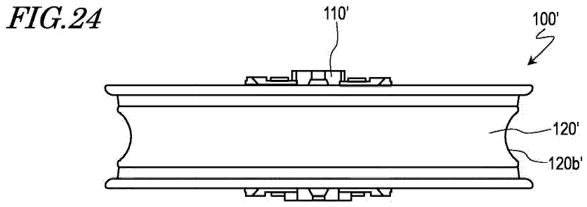

Then, a flow forming process is performed for the precursory rim 120' of the workpiece 100' (Step s3). There is no particular limitation as to the specific method of performing the flow forming process. The workpiece 100' after the flow forming process is shown in FIGS. 22, 23 and 24. FIG. 22 and FIG. 23 are a left side view and a right side view, respectively, schematically showing the workpiece 100' after the flow forming process. FIG. 24 is a plan view showing the workpiece 100' after the flow forming process as viewed from a radial direction. As shown in FIGS. 22, 23 and 24, the flow forming process has caused plastic deformation of the precursory rim 120'; more specifically, the precursory rim 120' has been stretched along the axial direction while being also thinned.

Next, a solution treatment (Step s4), a quenching process (Step s5), and an artificial aging process (Step s6) are performed in this order. This series of processes may sometimes be called a T6 heat treatment. The solution treatment may be performed at 530°C for 4.5 hours, for example. The quenching process may be performed through water-cooling at 60°C, for example. The artificial aging process may be performed at 170°C for 3.2 hours, for example.

Thereafter, a machining process is performed (Step s7). Through the machining process, the wheel-shaft insertion hole 111 and the like are formed, and also their dimensions are adjusted. In this manner, the wheel 100 is obtained. Note that the wheel-shaft insertion hole 111 does not need to be formed via a machining process. For example, at step s2, a workpiece 100' that already has a wheel-shaft insertion hole 111 may be formed.

In the above-described production method, the aluminum alloy that is provided at step s1 contains Si in an amount of not less than 5.0 mass% and not more than 7.5 mass% and Mg in an amount of not less than 0.40 mass% and not more than 0.90 mass%; thus, the aluminum alloy provided has good castability, as well as good tensile strength and proof stress. The aluminum alloy having good castability makes it easier to realize a complicated shape even by using a gravity casting technique at step s2 of forming the workpiece (intermediate product) 100'. Good tensile strength and proof stress make it possible to provide a sufficient strength even in the case of a complicated shape. As the amount of Mg added to the aluminum alloy is increased, tensile strength and proof stress may improve, but elongation (toughness) tends to lower. However, at step s3, the precursory rim 120' of the workpiece 100' is subjected to a flow forming process, whereby the elongation of the rim 120 of the product (wheel) 100 improves, thus to compensate for a decrease in elongation that is ascribable to the increased amount of Mg added. Therefore, with the above-described production method, the rim 120 can be enhanced in terms of not only tensile strength and proof stress, but also elongation (toughness).

Moreover, as in the above-described production method, Step s4 of performing a solution treatment after Step s3, Step s5 of performing a quenching process after Step s4, and Step s6 of performing an artificial aging process after Step s5 may further be included. This series of heat treatment processes allows mechanical properties to be adjusted (e.g., so that tensile strength, proof stress, and hardness are increased).

### [Another example method of producing a wheel for straddled vehicles]

Another example method of producing the wheel 100 will be described.

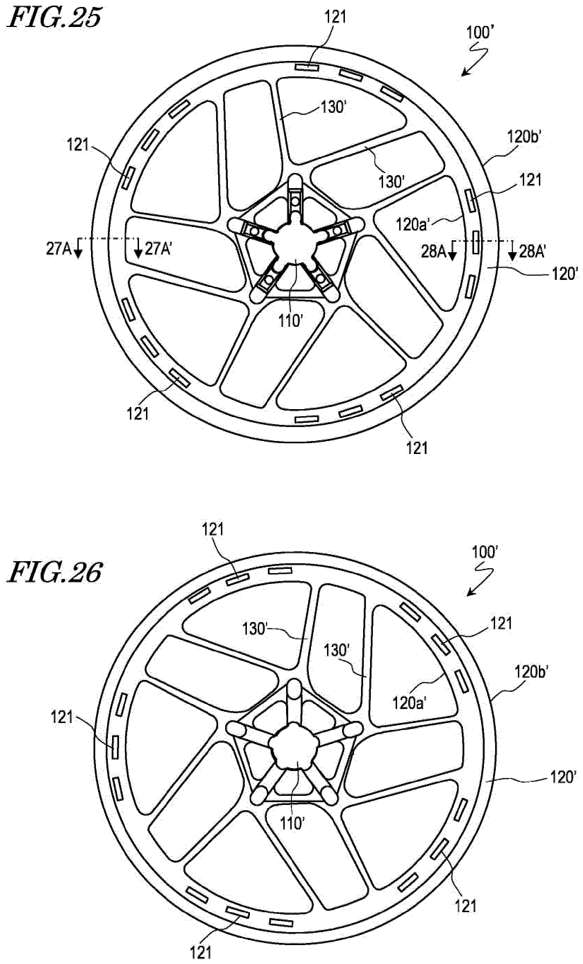

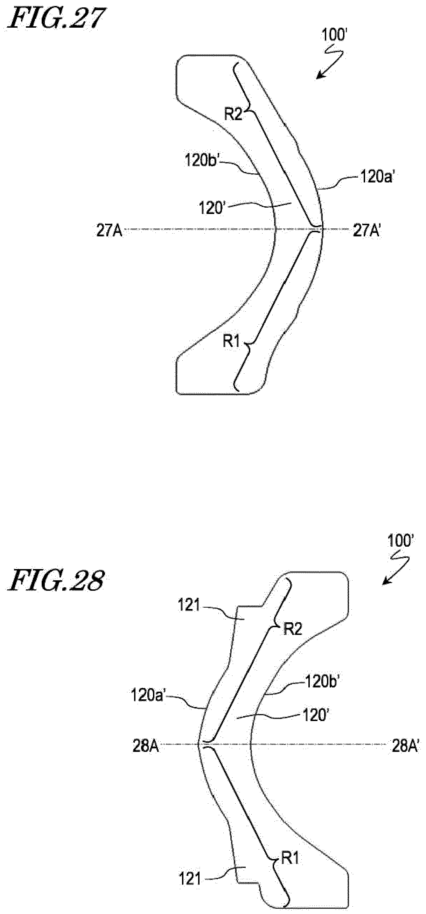

First, an intermediate product (workpiece) made of an aluminum alloy is provided. The workpiece may suitably be formed by a gravity casting technique, for example. Specific shapes for the workpiece are shown in FIG. 25 to FIG. 28. FIG. 25 and FIG. 26 are a left side view and a right side view, respectively, schematically showing the workpiece 100'. FIG. 27 and FIG. 28 are cross-sectional views taken along line 27A-27A' and line 28A-28A', respectively, in FIG. 25.

As shown in FIG. 25 to FIG. 28, the workpiece 100' includes a precursory hub 110', a precursory rim 120', and a plurality of precursory spokes 130' connecting the precursory hub 110' and the precursory rim 120'. The precursory hub 110' is a portion to become the hub 110 of the wheel 100. Similarly, the precursory rim 120' is a portion to become the rim 120, and the precursory spokes 130' are portions to become the spokes 130.

The precursory hub 110' is located at the center of the workpiece 100'. In the example shown, the wheel-shaft insertion hole 111 is not formed in the precursory hub 110' yet. The precursory rim 120' has an annular shape, and extends along the circumferential direction of the workpiece 100'. The precursory rim 120' has an inner peripheral surface 120a' and an outer peripheral surface 120b'. The plurality of precursory spokes 130' connect the precursory hub 110' and the precursory rim 120'. More specifically, the plurality of precursory spokes 130' connect an outer periphery of the precursory hub 110' and the inner peripheral surface 120a' of the precursory rim 120'.

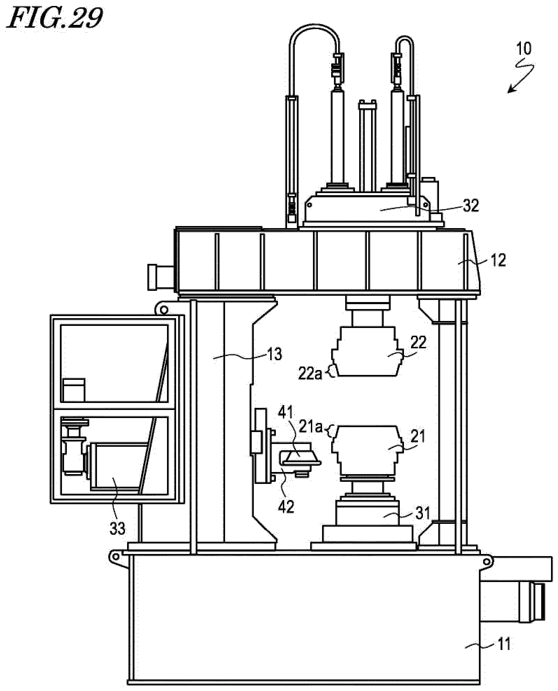

Then, a flow forming process is performed for the precursory rim 120' of the workpiece 100' by using a flow forming apparatus. An example of a flow forming apparatus to be used at this step is shown in FIG. 29. The flow forming apparatus 10 shown in FIG. 29 includes: a first mandrel 21 and a second mandrel 22; a rotating mechanism 31 to rotate the first mandrel 21 and the second mandrel 22; and a roller 41 to be pressed against the outer peripheral surface 120b' of the precursory rim 120' of the workpiece 100'.

Hereinafter, between the first mandrel 21 and the second mandrel 22, the first mandrel 21 being located relatively low will be referred to as the "lower mandrel", whereas the second mandrel 22 being located relatively high will be referred to as the "upper mandrel".

The rotating mechanism 31, which includes a motor, is placed on a pedestal 11. The lower mandrel 21 is attached to a leading end of the rotating mechanism 31. On a roof 12, a mandrel moving mechanism 32 to move the upper mandrel 22 up or down is placed. The upper mandrel 22 is attached to a leading end of the mandrel moving mechanism 32. On a wall 13, a roller moving mechanism 33 to move the roller 41 in the up-down direction, the right-left direction, or the front-rear direction is placed. The roller 41 is supported, in a rotatable manner, by an arm 42 that is attached to a leading end of the roller moving mechanism 33.

With the workpiece 100' being externally fitted on the lower mandrel 21 and the upper mandrel 22, a flow forming process is performed. At this time, the lower mandrel 21 and the upper mandrel 22 are coupled in such a manner that the upper mandrel 22 will rotate as the lower mandrel 21 rotates. For example, the flow forming process may be performed in a state where a portion the lower mandrel 21 is fitted in a portion of the upper mandrel 22.

The lower mandrel 21 has a surface (hereinafter referred to as the "first abutting surface") 21a that abuts with the inner peripheral surface 120a' of the precursory rim 120' of the workpiece 100' from one direction (e.g., from below herein) along the axial direction of the workpiece 100'.

The upper mandrel 22 has a surface (hereinafter referred to as the "second abutting surface") 22a that abuts with the inner peripheral surface 120a' of the precursory rim 120' of the workpiece 100' from the opposite direction (e.g., from above herein) along the axial direction of the workpiece 100'.

As shown in FIG. 27 and FIG. 28, the inner peripheral surface 120a' of the precursory rim 120' of the workpiece 100' includes: a first region R1 to abut with a first abutting surface 21a of the lower mandrel 21; and a second region R2 to abut with a second abutting surface 22a of the upper mandrel 22. As shown in FIG. 25, FIG. 26 and FIG. 28, each of the first region R1 and the second region R2 includes at least one stepped portion (protrusion) 121 protruding inwardly along the radial direction of the workpiece 100'. In the example shown, each of the first region R1 and the second region R2 includes a plurality of (i.e., two or more) stepped portions 121 that are formed discretely along the circumferential direction of the workpiece 100'.

In the configuration illustrated herein, the stepped portions 121 in the first region R1 and the stepped portions 121 in the second region R2 overlap one another when viewed along the axial direction; however, the positioning of the stepped portions 121 is not limited thereto. Alternatively, the stepped portions 121 in the first region R1 and the stepped portions 121 in the second region R2 may be shifted from one another when viewed along the axial direction (i.e., so that the stepped portions 121 in the first region R1 and the stepped portions 121 in the second region R2 are staggered along the circumferential direction). Although an example has been illustrated where essentially the entire inner peripheral surface 120a' of the precursory rim 120' consists of the first region R1 and the second region R2, the positioning of the first region R1 and the second region R2 is not limited thereto. Alternatively, only a portion of a half of the inner peripheral surface 120a' along the axial direction (i.e., a lower half in FIG. 27 and FIG. 28) may be the first region R1, while only a portion of another half of the inner peripheral surface 120a' along the axial direction (i.e., an upper half in FIG. 27 and FIG. 28) may be the second region R2.

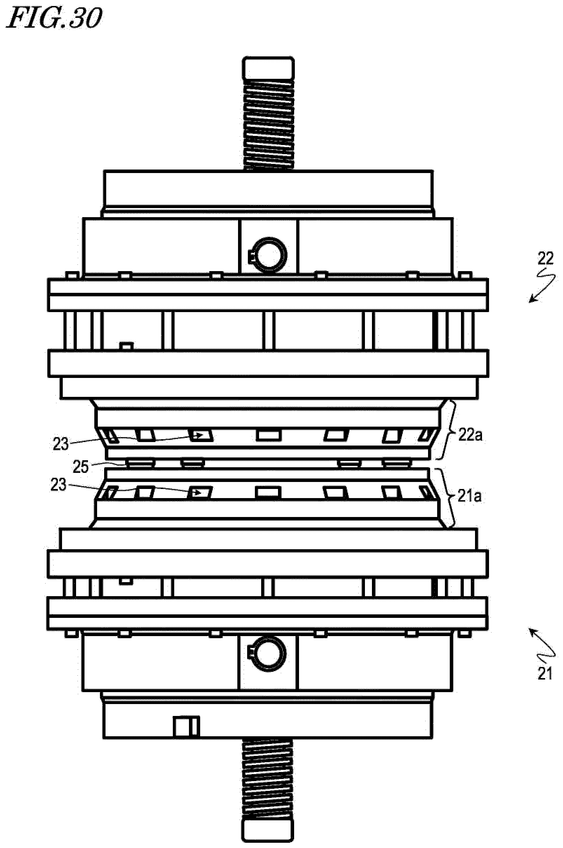

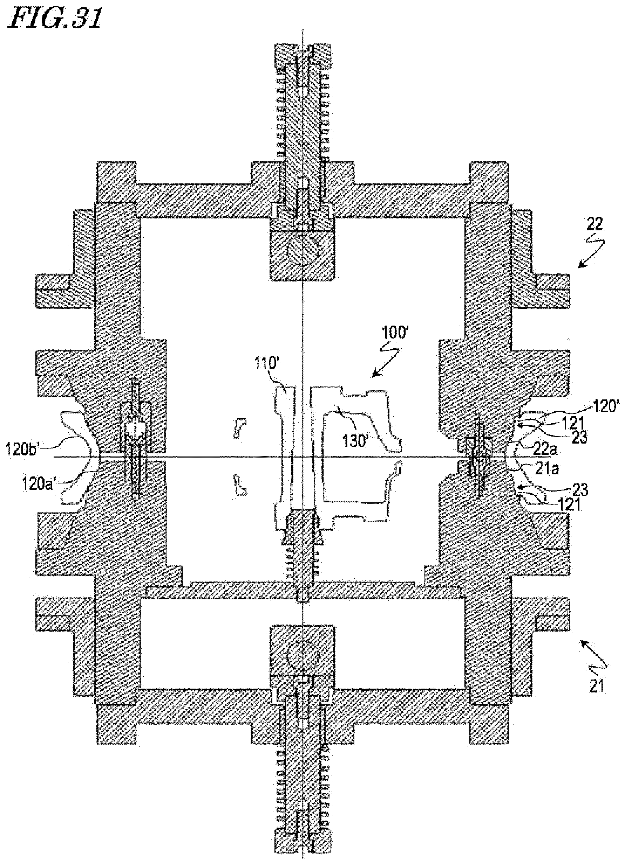

In FIG. 29, the shapes of the lower mandrel 21 and the upper mandrel 22 are shown simplified. FIG. 30 and FIG. 31 show specific examples of the lower mandrel 21 and the upper mandrel 22. FIG. 30 is a side view schematically showing the lower mandrel 21 and the upper mandrel 22, illustrating a state where the lower mandrel 21 and the upper mandrel 22 are coupled (more specifically, a guide pin 25 of the lower mandrel 21 is inserted in an aperture of the upper mandrel 22). FIG. 31 is a cross-sectional view schematically showing a state where the workpiece 100' is clamped by the lower mandrel 21 and the upper mandrel 22.

As has already been described, the lower mandrel 21 has the first abutting surface 21a, which abuts with the inner peripheral surface 120a' of the precursory rim 120' from below; and the upper mandrel 22 has the second abutting surface 22a, which abuts with the inner peripheral surface 120a' of the precursory rim 120' from above. Each of the first abutting surface 21a of the lower mandrel 21 and the second abutting surface 22a of the upper mandrel 22 is shaped so as to correspond to the plurality of stepped portions 121 of the workpiece 100'. Specifically, each of the first abutting surface 21a of the lower mandrel 21 and the second abutting surface 22a of the upper mandrel 22 includes a plurality of engaging portions (recesses) 23 to engage with the plurality of stepped portions 121.

When the lower mandrel 21 and the upper mandrel 22 are rotated by the rotating mechanism 31, the workpiece 100' rotates accordingly. As the roller 41 is pressed against the outer peripheral surface 120b' of the precursory rim 120' of the workpiece 100' in this state, the flow forming process is accomplished.

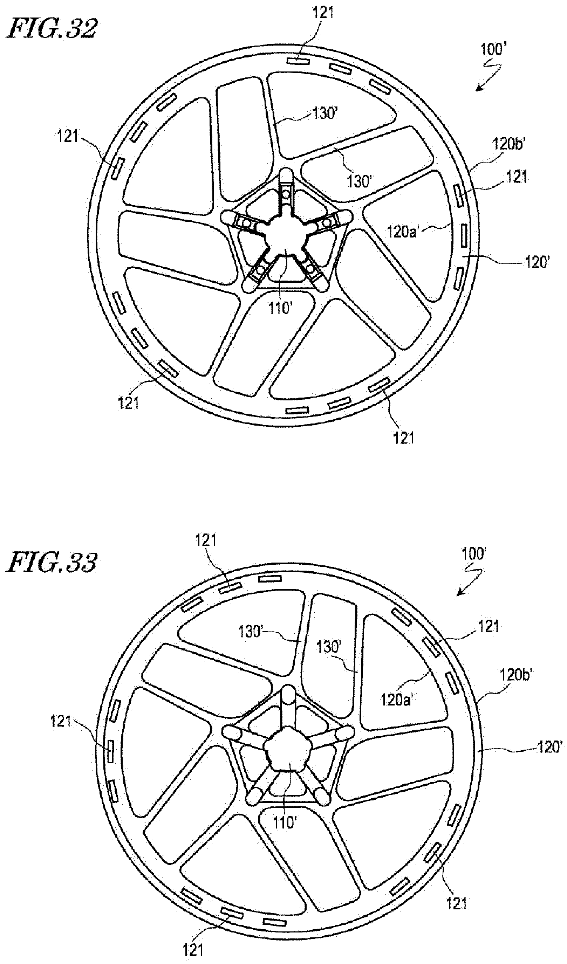

The workpiece 100' after the flow forming process is shown in FIG. 32 and FIG. 33. FIG. 32 and FIG. 33 are a left side view and a right side view, respectively, schematically showing the workpiece 100' after the flow forming process. The flow forming process has caused plastic deformation of the precursory rim 120'; more specifically, the precursory rim 120' has been stretched along the axial direction while being also thinned.

Next, a heat treatment is performed. More specifically, a solution treatment, a quenching process, and an artificial aging process are performed in this order (T6 heat treatment).

Thereafter, a cutting process is performed. Through the cutting process, the wheel-shaft insertion hole 111 and the like are formed, and also their dimensions are adjusted. At this time, the plurality of stepped portions 121 on the inner peripheral surface 120a' of the precursory rim 120' are removed. In this manner, the wheel 100 is obtained. Note that the wheel-shaft insertion hole 111 does not need to be formed via a cutting process. For example, at the step of providing the workpiece 100', a workpiece 100' that already has a wheel-shaft insertion hole 111 may be provided.

In the above-described example, within the inner peripheral surface 120a' of the precursory rim 120' of the intermediate product (workpiece) 100' provided, each of the region (first region) R1 to abut with the lower mandrel (first mandrel) 21 and the region (second region) R2 to abut with the upper mandrel (second mandrel) 22 includes at least one stepped portion 121 protruding inwardly along the radial direction of the workpiece 100'. Because of such a stepped portion(s) 121 being provided on the inner peripheral surface 120a' of the precursory rim 120', the torque from the lower mandrel 21 and the upper mandrel 22 being rotated by the rotating mechanism 31 can be sufficiently transmitted to the workpiece 100'. In other words, the stepped portion(s) 121 enables clamping of the workpiece 100'. Since this makes it unnecessary to rely on the precursory hub 110' or the precursory spoke 130' for the clamping of the workpiece 100', it becomes possible to produce the wheel 100 in such a manner that clamp scars will not be left on the hub 110 and the spoke 130. For example, since the at least one stepped portion 121 including a clamping surface is removed at the step of performing a cutting process, no clamp scars will be left on the final product (i.e., the wheel 100 for straddled vehicles).

Note that the number of stepped portions 121 in each of the first region R1 and the second region R2 is not limited to what is illustrated in FIG. 25 and FIG. 26. It suffices if at least one stepped portion 121 is provided in each of the first region R1 and the second region R2.

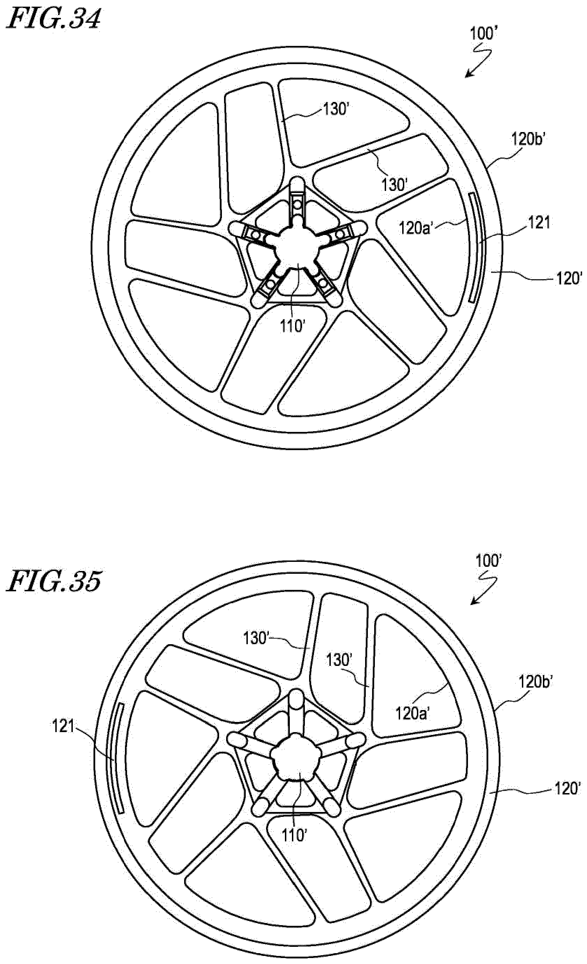

Another exemplary configuration of the stepped portion 121 is shown in FIG. 34 and FIG. 35. In the example shown in FIG. 34 and FIG. 35, only one stepped portion 121 is provided in each of the first region R1 and the second region R2. Such a configuration also allows the wheel 100 to be produced without leaving clamp scars on the hub 110 and the spoke 130.

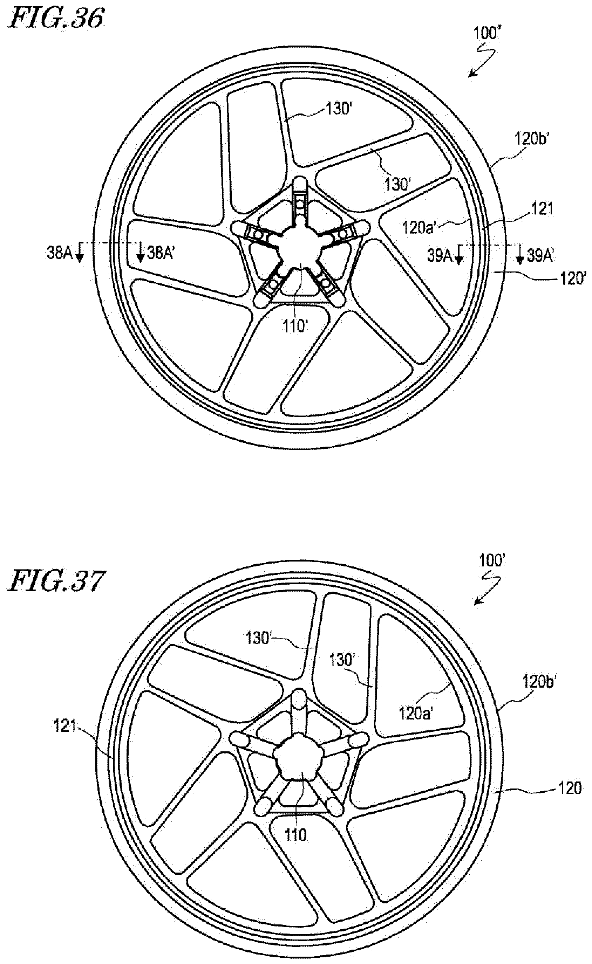

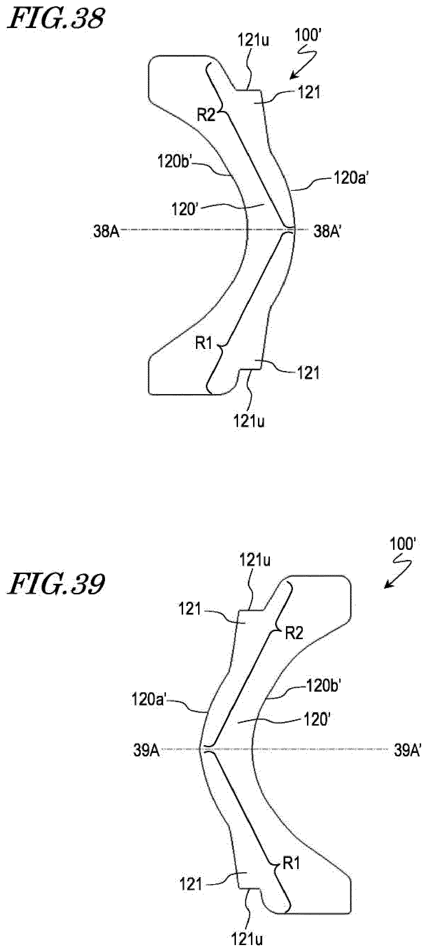

Still another exemplary configuration of the stepped portion 121 is shown in FIG. 36, FIG. 37, FIG. 38 and FIG. 39. In the example shown in FIG. 36 to FIG. 39, in each of the first region R1 and the second region R2, one stepped portion 121 is formed along the entire circumference along the circumferential direction of the workpiece 100'. In this case, an upper surface (i.e., a surface of the workpiece 100' facing outward along the axial direction) 121u of the stepped portion 121 has an annular shape, this upper surface 121u functioning as a clamping surface. Specifically, clamping of the workpiece 100' is achieved by utilizing a frictional force occurring between the upper surface (clamping surface) 121u of the stepped portion 121 and the abutting surface (i.e., the first abutting surface 21a of the lower mandrel 21 or the second abutting surface 22a of the upper mandrel 22) of each mandrel pressed against the upper surface 121u.

In the case where such a stepped portion 121 (a stepped portion 121 being formed along the entire circumference along the circumferential direction of the workpiece 100') are provided in each of the first region R1 and the second region R2 of the inner peripheral surface 120a' of the precursory rim 120', there is an advantage in that the workpiece 100' can be easily set to the flow forming apparatus 10.

On the other hand, as was illustrated in FIG. 25 and FIG. 26, etc., when a plurality of stepped portions 121 are formed discretely along the circumferential direction of the workpiece 100', the torque from the mandrel (the lower mandrel 21 or the upper mandrel 22) can be received on a partial side surface (a side surface oriented in the circumferential direction of the workpiece 100') of each stepped portion 121, so that not only the upper surface 121u of each stepped portion 121 but also the partial side surface functions as a clamping surface.

In the case where a plurality of stepped portions 121 are provided on the inner peripheral surface 120a' of the precursory rim 120', the workpiece 100' can be prevented from slipping against each mandrel. Moreover, a smaller amount of metal material is needed to form the workpiece 100' than in the case where one stepped portion 121 is formed continuously along the entire circumference.

Each of the first abutting surface 21a of the lower mandrel 21 and the second abutting surface 22a of the upper mandrel 22 is preferably shaped so as to correspond to at least one stepped portion 121 of the workpiece 100'. Specifically, as is illustrated, each of the first abutting surface 21a of the lower mandrel 21 and the second abutting surface 22a of the upper mandrel 22 preferably includes at least one engaging portion 23 to engage with at least one stepped portion 121.

In the step of providing the workpiece 100', the workpiece 100' can be formed from a metal material by a gravity casting technique. Employing a gravity casting technique provides an advantage of reducing the weight of relatively large wheels because it is easy to form a hollow structure by utilizing a core.

According to an embodiment of the present teaching, there is provided an aluminum alloy for vehicle wheels having a composition that is suitable for both gravity casting and flow forming. An aluminum alloy for vehicle wheels according to an embodiment of the present teaching is suitably used for a wheel for various vehicles, such as straddled vehicles.

## Claims

1. An aluminum alloy for vehicle wheels, comprising:
Si in an amount of not less than 5.0 mass% and not more than 7.5 mass% and Mg in an amount of not less than 0.40 mass% and not more than 0.90 mass%; and
Al and an inevitable impurity as a balance.

2. The aluminum alloy for vehicle wheels of claim 1, in which Cu has a percentage content of 0.20 mass% or less.

3. The aluminum alloy for vehicle wheels of claim 1 or 2, in which Fe has a percentage content of 0.20 mass% or less.

4. The aluminum alloy for vehicle wheels of any of claims 1 to 3, in which Ti has a percentage content of 0.20 mass% or less.

5. The aluminum alloy for vehicle wheels of any of claims 1 to 4, further comprising: Na in an amount of not less than 0.002 mass% and not more than 0.01 mass%; or Sr in an amount of not less than 0.005 mass% and not more than 0.03 mass%.

6. A vehicle wheel comprising: a hub (110) having an aperture (111) into which a wheel shaft is to be inserted; an annular rim (120); and a plurality of spokes (130) connecting the hub (110) and the rim,
wherein the vehicle wheel is made of the aluminum alloy for vehicle wheels of any of claims 1 to 5.

7. A method of producing a vehicle wheel comprising: a hub (110) having an aperture (111) into which a wheel shaft is to be inserted; an annular rim (120); and a plurality of spokes (130) connecting the hub (110) and the rim (120), the method comprising:
step A of providing the aluminum alloy for vehicle wheels of any of claims 1 to 5;
step B of forming an intermediate product (100') from the aluminum alloy by using a gravity casting technique, the intermediate product (100') including a precursory hub (110'), a precursory rim (120'), and a plurality of precursory spokes (130') connecting the precursory hub (110') and the precursory rim (120'); and
step C of performing a flow forming process for the precursory rim (120') of the intermediate product (100').

8. The method of producing a vehicle wheel of claim 7, further comprising:
step D of performing a solution treatment after step C;
step E of performing a quenching process after step D; and
step F of performing an artificial aging process after step E.
